# EUROPEAN PATENT SPECIFICATION

(11) **EP 4 243 238 B1**
(45) Date of publication and mention of the grant of the patent: **15.10.2025**
(21) Application number: 23157056.5
(22) Date of filing: 16.02.2023
(51) Int. Cl.: H02J 7/00, B60L 53/60, B60L 53/66, B60L 53/67, B60L 53/80, B60L 58/12, H02J 3/32, H02J 3/14

(54) **SYSTEM, PROGRAM, AND METHOD**
SYSTEM, PROGRAMM UND VERFAHREN
SYSTÈME, PROGRAMME ET PROCÉDÉ

(30) Priority: 11.03.2022 JP 2022038235
(43) Date of publication of application: 13.09.2023
(73) Proprietor: HONDA MOTOR CO., LTD., Tokyo 105-8404 (JP)
(72) Inventor: WANG, Qianlong, Saitama, 351-0193 (JP)
(74) Representative: Weickmann & Weickmann PartmbB

(56) References cited:
- WO-A1-2021/019444
- US-A1- 2015 298 565

## Description

### BACKGROUND

### 1. TECHNICAL FIELD

The present invention relates to a system, a program, and a method.

### 2. RELATED ART

Patent Documents 1 to 6 disclose a technique relating to a replaceable battery.

### [Prior Art Document]

### [Patent Document]

Patent Document 1: Japanese Patent Application Publication No. 2019-154220
Patent Document 2: International Publication No. WO 2011/016273
Patent Document 3: Japanese Patent Application Publication No. 2019-153576
Patent Document 4: Japanese Patent Application Publication No. 2020-077521
Patent Document 5: International Publication No. WO 2021/019444 A1
Patent Document 6: United States Patent Application Publication No. 2015/298565 A1

Patent Document 5 discloses a method for reusing an unopened electric vehicle battery within a renewable energy system. The method includes receiving, by a central controller within an energy storage system, a signal from a control unit coupled to an electric vehicle battery, determining, by the central controller, a status of the electric vehicle battery based on the received signal, receiving, by the central controller, a current load demand associated with the energy storage system, locating, by the central controller, the electric vehicle battery to a load application based on the current load demand and the determined electric vehicle battery status, wherein the electric vehicle battery is allocated to the load application if the electric vehicle status satisfies a threshold state of charge, and switching, by the central controller, the electric vehicle battery from a first operational mode to a second operational mode.

Patent Document 6 discloses a charging support system for an electric vehicle. The system supporting charging to the electric vehicle includes an information collector for collecting information and a controller for controlling based on information that the information collector collects.
The controller is configured to acquire predetermined electric vehicle information related to a travel state of the vehicle from among a plurality of electric vehicles via the information collector, acquire predetermined charging station information related to a device state and a use state of the vehicle from among a plurality of charging stations via the information collector, detect a predetermined electric vehicle that needs to be charged to reach a destination from a current location, based on the predetermined electric vehicle information acquired from each of the plurality of the electric vehicles via the information collector, detect a plurality of predetermined charging stations available for the predetermined electric vehicle from among the plurality of the charging stations, based on the predetermined charging station information and the predetermined electric vehicle information, select one predetermined charging station from among the plurality of predetermined charging stations based on a sum of arrival time of the predetermined electric vehicle arriving at the predetermined charging station and time required for charging at the predetermined charging station, and possibility of the predetermined electric vehicle arriving at the predetermined charging station, and detect a predetermined path for guiding the predetermined electric vehicle to the selected predetermined charging station and transmit predetermined guidance information including the predetermined path to the predetermined electric vehicle.

### SUMMARY

It is known that an effective use of a battery is effective for an effective use of energy, but there is a problem that the realization is not easy.

A first aspect of the present invention provides a system.

The system is a system configured to control a plurality of stations that are configured to charge and discharge a plurality of movable batteries. The system includes a classification unit configured to divide the plurality of movable batteries that are connected to the plurality of stations, into a plurality of groups based on respective charging rates of the plurality of movable batteries. The system includes a control unit configured to control ratios or a number of movable batteries belonging to each of the plurality of groups in each time window, based on a prediction of use in the plurality of stations. The system is configured to control the plurality of stations that are configured to charge and discharge the plurality of movable batteries. The classification unit is configured to divide the plurality of movable batteries such that at least one of the plurality of groups includes at least one of the plurality of movable batteries that are connected to a first station of the plurality of stations and at least one of the plurality of movable batteries that are connected to a second station of the plurality of station. The second station is different from the first station.

When some movable batteries among the plurality of movable batteries are predicted to be used, the control unit may be configured to cause a movable battery, among the plurality of movable batteries, belonging to a group that has a charging rate that can be charged to a predetermined value or higher by a predicted time of use to be charged, to be transferred to another group that has a higher charging rate.

The control unit may be configured to cause a movable battery, among the plurality of movable batteries, belonging to a group whose charging rate is lower than a predetermined value, in response to a request to increase an amount of power consumption in the station to be charged, and to be transferred to another group that has a higher charging rate.

The control unit may be configured to predict a request to increase or decrease an amount of power consumption in the plurality of stations, and control, based on the prediction, ratios or a number of movable batteries belonging to each of the plurality of groups in each time window, within a range in which the prediction of use is satisfied.

The control unit may be configured to maintain, when a request to decrease an amount of power consumption is predicted in the plurality of stations, ratios or a number of movable batteries belonging to a group whose charging rate is higher than a predetermined value, at a predetermined value or higher.

The control unit may be configured to maintain, when a request to increase an amount of power consumption is predicted in the plurality of station, ratios or a number of movable batteries belonging to a group whose charging rate is lower than a predetermined value, at a predetermined value or higher.

The system may include the plurality of movable batteries. The plurality of movable batteries may include a battery that is to be mounted on a vehicle.

The plurality of movable batteries may include a battery that is to be mounted on a vehicle, which is replaceable at the plurality of stations.

A second aspect of the present invention provides a method.

The method controls a plurality of stations that are configured to charge and discharge a plurality of movable batteries. The method includes dividing the plurality of movable batteries that are connected to the plurality of stations, into a plurality of groups based on respective charging rates of the plurality of movable batteries. The method includes controlling ratios or a number of movable batteries belonging to each of the plurality of groups in each time window, based on a prediction of use in the plurality of stations. The dividing the plurality of movable batteries includes dividing the plurality of movable batteries such that at least one of the plurality of groups includes at least one of the plurality of movable batteries that are connected to a first station of the plurality of stations and at least one of the plurality of movable batteries that are connected to a second station of the plurality of station. The second station is different from the first station.

A third aspect of the present invention provides a computer program. The computer program including instructions, which when the program is executed by a computer, causes the computer to carry out the above method.

The summary of the present invention does not necessarily describe all necessary features of the present invention. The present invention may also be a sub-combination of the features described above.

### BRIEF DESCRIPTION OF THE DRAWINGS

Fig. 1 conceptually shows a mode of use of a power system 5 in one embodiment.
Fig. 2 shows an example of a system configuration of a system 100.
Fig. 3 schematically shows grouping of batteries 12.
Fig. 4 schematically shows a state transition of the battery 12 that is capable of being charged and feeding.
Fig. 5 schematically shows a state transition of the battery 12 in a state in which only charging is possible.
Fig. 6 shows changes in ratios of the batteries 12 belonging to a group A to a group D.
Fig. 7 schematically shows changes in amount of power resources that are able to be provided from a station 30a and a station 30b in a day.
Fig. 8 shows an example of a computer 2000.

### DESCRIPTION OF EXEMPLARY EMBODIMENTS

Hereinafter, the present invention will be described by way of embodiments of the invention, but the following embodiments are not intended to limit the invention according to the claims. In addition, not all combinations of features described in the embodiments are essential to the solution of the invention.

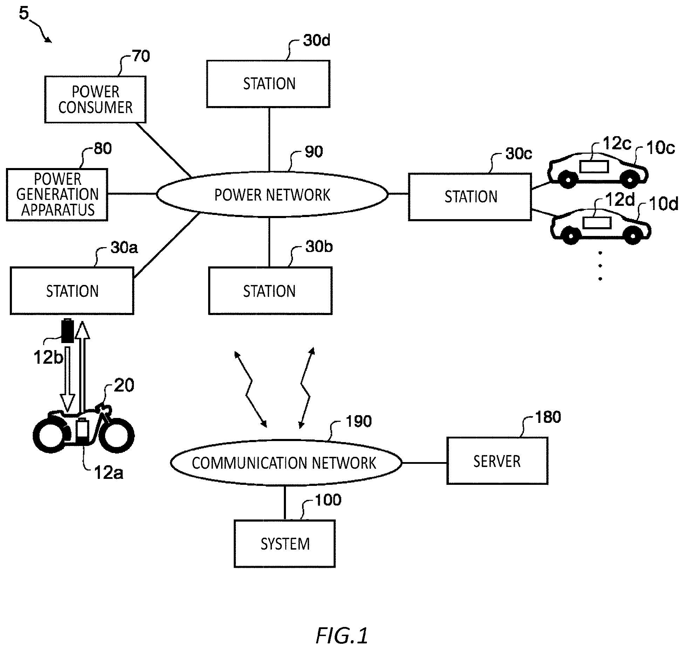

Fig. 1 conceptually shows a mode of use of a power system 5 in one embodiment. A power system 5 includes a station 30a, a station 30b, a station 30c, and a station 30d, a power generation apparatus 80, a system 100, a server 180, a vehicle 20, a vehicle 10c, and a vehicle 10d. In the present embodiment, the station 30a, the station 30b, the station 30c, and the station 30d may be collectively referred to as a "station 30".

The system 100 is connected to the server 180 through a communication network 190. The server 180 is able to communicate with the station 30 through the communication network 190. The system 100 controls the station 30 through the communication network 190. The system 100 communicates with a vehicle 10 through the communication network 190, and acquires various pieces of information of the vehicle 10 such as a travel history of the vehicle 10 and an SOC of a battery 12.

The station 30, a power consumer 70, and the power generation apparatus 80 are connected to a power network 90. The power generation apparatus 80 includes, for example, a power plant operated by an electric power company. Power generated by the power generation apparatus 80 is able to be supplied to the station 30 and the power consumer 70 through the power network 90. The power network 90 is, for example, a power grid.

The station 30a and the station 30b hold a plurality of batteries that are able to be mounted on the vehicle 20, and charge and discharge the plurality of batteries that are held. The vehicle 20 is, for example, an electric motorcycle. A battery 12a that is used in the vehicle 20 is replaced at the station 30. As an example, the battery 12a that has been used for travel of the vehicle 20 is replaced with a battery 12b that has been charged at the station 30a, to be mounted on the vehicle 20. The battery 12a and the battery 12b are examples of movable batteries. The battery 12a and the battery 12b are movable by being mounted on the vehicle 20.

The station 30c and the station 30d can charge and discharge the plurality of batteries including a battery 12c that is mounted on the vehicle 10c and a battery 12d that is mounted on the vehicle 10d. The vehicle 10c and the vehicle 10d are, for example, electric vehicles. As an example, the vehicle 10c and the vehicle 10d may be shared cars. A user of a shared car can return the vehicle to the station 30c, and use a specific vehicle from among a plurality of vehicles including the vehicle 10c and the vehicle 10d. The battery 12c and the battery 12d are examples of the movable batteries. The battery 12c and the battery 12d are movable by being mounted on the vehicle 10c and the vehicle 10d, respectively.

The station 30a and the station 30b can charge the batteries that are held by the respective stations with the power supplied from the power network 90. The station 30a and the station 30b can discharge the batteries that are held by the respective stations to supply the power to the power network 90. The station 30c and the station 30d can charge the batteries that are mounted on the vehicles which are connected to the respective stations, with the power supplied from the power network 90. The station 30c and the station 30d can discharge the batteries that are mounted on the vehicles which are connected to the respective stations, to supply the power to the power network 90.

The system 100 controls the station 30. The system 100 can cause the station 30 to discharge the battery and supply the power to the power network 90 when a power shortage occurs in the power network 90. The system 100 can cause the station 30 to charge the battery and receive the power from the power network 90 when there is a power surplus in the power network 90. The system 100 can use the station 30 to provide a primary adjustment capacity, a secondary adjustment capacity, and a tertiary adjustment capacity in the power network 90. In this manner, the system 100 can aggregate the stations 30 to hold power resources for the power network 90.

The server 180 is, for example, a server used by a power aggregator. The server 180 performs power trading in a power market. The system 100 can aggregate the stations 30 to provide the server 180 with the power resources that are held. The system 100 controls the charge and the discharge of the battery by the station 30 to provide the power contracted by the server 180. For example, the system 100 controls, according to a demand from the server 180, the charge and the discharge of the battery by the station 30, to provide the power in accordance with the demand.

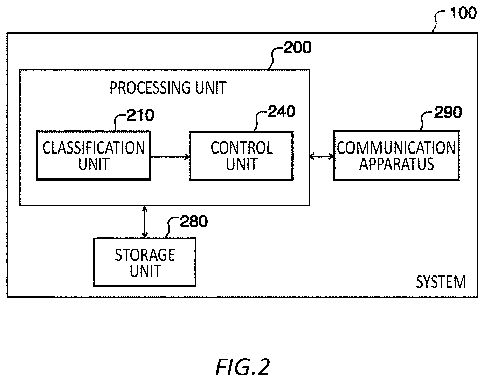

Fig. 2 shows an example of a system configuration of a system 100. The system 100 includes a processing unit 200, a storage unit 280, and a communication apparatus 290. The system 100 is configured to control at least one station among a plurality of stations 30 that are configured to charge and discharge a plurality of batteries 12.

The processing unit 200 controls the communication apparatus 290. The communication apparatus 290 is responsible for a communication between the station 30a and the server 180. The processing unit 200 is realized by a calculation processing apparatus including a processor. The storage unit 280 is realized by including each non-volatile storage medium. The processing unit 200 performs processing by using information stored in the storage unit 280. The processing unit 200 may be realized by a microcomputer including a CPU, a ROM, a RAM, an I/O, a bus, and the like. The system 100 may be realized by a computer.

In the present embodiment, the system 100 is set to be realized by a single computer. However, in another embodiment, the system 100 may be realized by a plurality of computers. At least some functions of the system 100 may be realized by one or more servers such as a cloud server.

The processing unit 200 includes a classification unit 210 and a control unit 240.

The control unit 240 acquires the travel history of the vehicle 10 and a charge and discharge history of the battery 12. The control unit 240 may acquire the travel history transmitted from the vehicle 10 to the system 100. The travel history of the vehicle 10 may include information in which a location of the vehicle 10, and the SOC of the battery 12 are associated with a date and time. The control unit 240 may acquire the charge and discharge history transmitted from the vehicle 10 to the system 100. The control unit 240 may acquire the charge and discharge history of the battery 12 transmitted from the station 30. The charge and discharge history may include information in which an amount of charge and discharge of the battery 12 is associated with the date and time. The control unit 240 may acquire information indicating a current state of vehicle 10. The current state of the vehicle 10 may include a current location of the vehicle 10, the current SOC of the battery 12 mounted on the vehicle 10, or the like.

The control unit 240 may acquire, from the station 30a and the station 30b, information indicating a replacement date and time of the battery 12, and the SOC of the battery 12 at the replacement time. The control unit 240 may predict a time window during which the battery 12 is used at the station 30, based on the acquired information. The expression that the battery 12 is used at the station 30 may include a situation in which the battery 12 is replaced at the station 30a and the station 30b. The expression that the battery 12 is used at the station 30 may include a situation in which the vehicle 10 leaves from the station 30c or the station 30d. The expression that the battery 12 is used at the station 30 may include a situation in which the battery 12 mounted on the vehicle 10 is charged and discharged at the station 30c or the station 30d. The control unit 240 may acquire information indicating the current SOCs of the batteries 12 that are held by the station 30a and the station 30b. The control unit 240 may perform various types of processing based on various types of information acquired from the vehicle 10 and the station 30.

The classification unit 210 is configured to divide the plurality of batteries 12 that are connected to at least one station 30, into a plurality of groups based on respective charging rates of the plurality of batteries 12. The control unit 240 is configured to control ratios or a number of the batteries 12 belonging to each of the plurality of groups in each time window, based on a prediction of use in at least one station 30.

When some batteries 12 among the plurality of batteries 12 are predicted to be used, the control unit 240 may cause the battery 12, among the plurality of batteries 12, belonging to a group that has a charging rate that can be charged to a predetermined value or higher by a predicted time of use to be charged, and to be transferred to another group that has a higher charging rate.

The control unit 240 may cause the battery 12, among the plurality of batteries 12, belonging to a group whose charging rate is lower than a predetermined value, in response to a request to increase an amount of power consumption in at least one station 30 to be charged, and to be transferred to another group that has a higher charging rate. The request to increase the amount of power consumption may be, for example, a request for a DR increase.

The control unit 240 may cause the battery 12, among the plurality of batteries 12, belonging to a group whose charging rate is higher than a predetermined value to be discharged within a range in which the prediction of use is satisfied, in response to a request to decrease an amount of power consumption in at least one station 30, and to be transferred to another group that has a lower charging rate. The request to decrease the amount of power consumption may be, for example, a request for a DR decrease.

The control unit 240 may predict the request to increase or decrease the amount of power consumption in at least one station 30, and control, based on the prediction, the ratios or the number of the batteries 12 belonging to each of the plurality of groups in each time window, within a range in which the prediction of use is satisfied.

The control unit 240 may maintain, when the request to decrease the amount of power consumption is predicted in at least one station 30, the ratios or the number of batteries 12 belonging to a group whose charging rate is higher than a predetermined value, at a predetermined value or higher.

The control unit 240 may maintain, when the request to increase the amount of power consumption is predicted in at least one station 30, the ratios or the number of batteries 12 belonging to a group whose charging rate is lower than a predetermined value, at a predetermined value or higher.

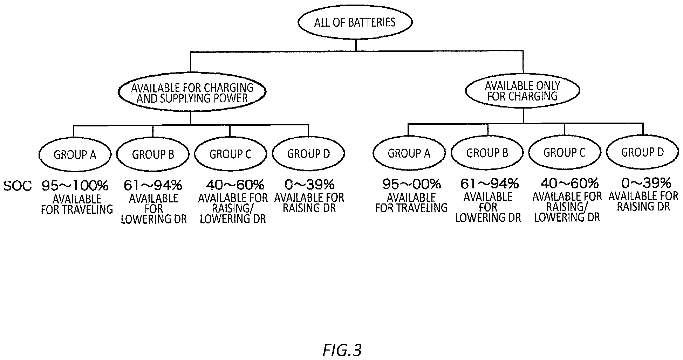

Fig. 3 schematically shows grouping of batteries 12. The classification unit 210 divides, into groups, the batteries 12 that are connected to the station 30.

Specifically, the classification unit 210 classifies the batteries 12 into the battery 12 that is capable of being charged and feeding, and the battery 12 that is only capable of being charged. The battery 12 that is capable of being charged and feeding is a battery connected to the station 30 that has not only a function of charging the battery 12, but also a function of feeding the power network 90 with the power obtained by discharging the battery 12. The battery 12 that is only capable of being charged is the battery 12 connected to the station 30 that has the function of charging the battery 12 and that does not have the function of feeding the power network 90 with the power obtained by discharging the battery 12.

The classification unit 210 classifies the battery 12 that is capable of being charged and feeding, and the battery 12 that is only capable of being charged, into a group A to a group D based on the SOC of the battery 12, respectively. As an example, the group A includes the battery 12 having an SOC of 95% or higher and 100% or lower. As an example, the group B includes the battery 12 having an SOC of 61% or higher and 94% or lower. As an example, the group C includes the battery 12 having an SOC of 40% or higher and 60% or lower. As an example, the group D includes the battery 12 having an SOC of 0% or higher and 39% or lower.

The battery 12 belonging to the group A indicates that the battery 12 is able to be used for travel of the vehicle 10 or the vehicle 20. The battery 12 belonging to the group B is the battery 12 having a predetermined remaining battery capacity that is able to be used mainly for the demand response (DR) decrease. The battery 12 belonging to the group C is the battery 12 having a remaining battery capacity that is able to be used mainly for any of the DR decrease and the DR increase. The battery 12 belonging to the group D is the battery 12 having a remaining battery capacity that is able to be used mainly for the DR increase.

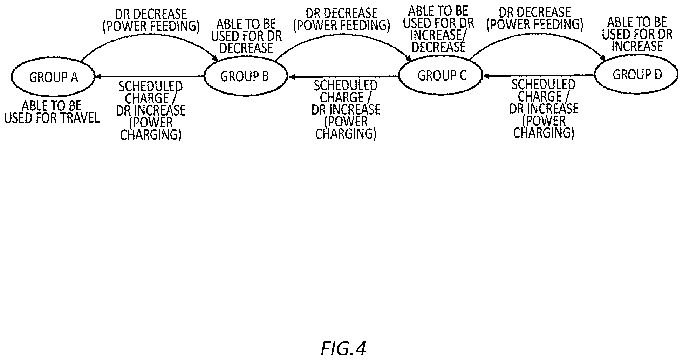

Fig. 4 schematically shows a state transition of the battery 12 that is capable of being charged and feeding. When the battery 12 belongs to the group D, the battery 12 may transition to a state of belonging to the group C by charging the battery 12 according to a scheduled charge of the battery 12 or the DR increase. When the battery 12 belongs to the group C, the battery 12 may transition to a state of belonging to the group B by charging the battery 12 according to a scheduled charge of the battery 12 or the DR increase. When the battery 12 belongs to the group B, the battery 12 may transition to a state of belonging to the group A by charging the battery 12 according to a scheduled charge of the battery 12 or the DR increase. The group A is in a state in which the battery 12 is able to be used for the travel of the vehicle 10 or the vehicle 20.

When the battery 12 belongs to the group A, the battery 12 may transition to a state of belonging to the group B by feeding the power from the battery 12 to an outside according to the DR decrease. When the battery 12 belongs to the group B, the battery 12 may transition to a state of belonging to the group C by feeding the power from the battery 12 to the outside according to the DR decrease. When the battery 12 belongs to the group C, the battery 12 may transition to a state of belonging to the group D by feeding the power from the battery 12 to the outside according to the DR decrease.

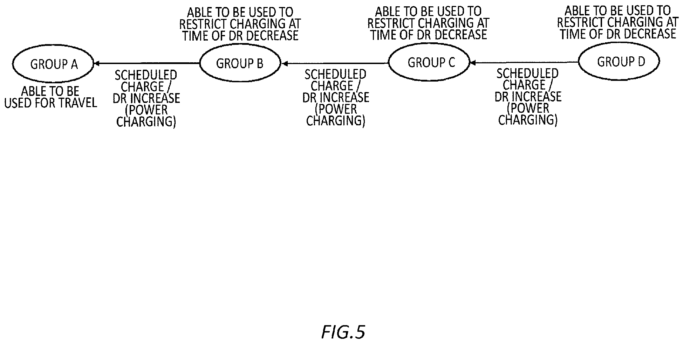

Fig. 5 schematically shows a state transition of the battery 12 in a state in which only charging is possible. In Fig. 5, the description of a part common to Fig. 4 will be omitted, and a part different from that in Fig. 4 will be described.

It is not possible for the battery 12 in a state of only capable of being charged to feed the power from the battery 12 to the outside, and thus the state transition from the group A to the group B, the state transition from the group B to the group C, and the state transition from the group C to the group D are not performed. It is not possible to feed the power from the battery 12 to the outside, and thus in a case where the battery 12 belongs to any of the group B, the group C, and the group D, when the request for the DR decrease is received, a response is possible only by restricting the charging of the battery 12, and the state transition is not performed.

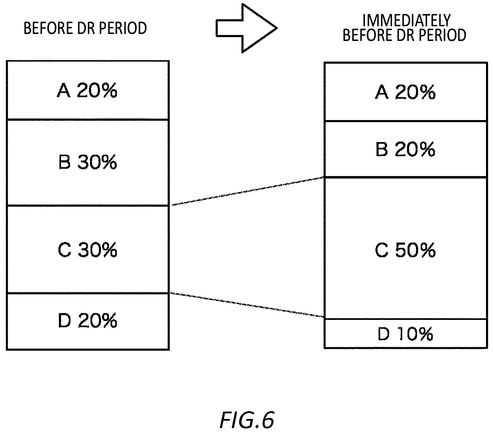

Fig. 6 shows changes in ratios of the batteries 12 belonging to a group A to a group D. At timing sufficiently before a start time of a DR period, a ratio of the battery 12 belonging to the group C is 30%.

When the DR period during which the demand response is performed approaches, the control unit 240 preferentially causes the battery 12 belonging to the group D to be charged, and preferentially causes the power to be fed from the battery 12 belonging to the group B to the power network 90. In this manner, the ratio of the battery 12 belonging to the group C is increased to 50% until immediately before the start time of the DR period. In this manner, it is possible to increase the ratio of the battery 12 that can provide the power network 90 with the adjustment capacity in both of an upward direction and a downward direction for the amount of power consumption during the DR period.

When the DR increase is scheduled to be performed during the DR period, the control unit 240 may maintain the ratio of the battery 12 belonging to the group D, at a predetermined value or higher.

When the DR decrease is scheduled to be performed during the DR period, the control unit 240 may maintain the ratio of the battery 12 belonging to the group B, at a predetermined value or higher.

In this way, the control unit 240 predicts the request to increase or decrease the amount of power consumption in the plurality of stations 30, and controls, based on the prediction, the ratios or the number of the batteries 12 belonging to each of the plurality of groups in each time window. At this time, the control unit 240 controls the ratios or the number of the batteries 12 belonging to each of the plurality of groups within a range in which the prediction of using the battery 12 is satisfied. For example, when the battery 12 is predicted to be used in a time window during the DR period or near the DR period, the control unit 240 may at least maintain the ratio of the battery 12 belonging to the group A.

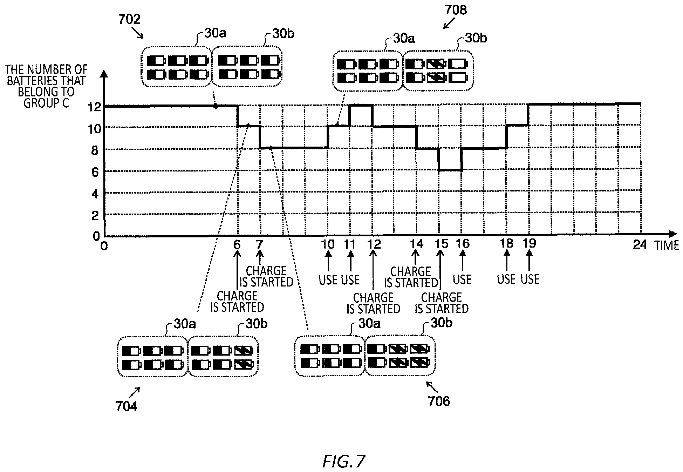

Fig. 7 is a diagram for describing processing when the station 30a and the station 30b are used. Fig. 7 schematically shows the state of charge of battery 12 together with changes in amount of power resources that are able to be provided from the station 30a and the station 30b in a day.

In Fig. 7, the amount of power resources is represented by a number of batteries that belong to the group C and that are held, as the power resources for the power network 90, by the station 30a and the station 30b. A horizontal axis of Fig. 7 is a time in a day, and a vertical axis of Fig. 7 is the number of batteries belonging to the group C. A maximum number of batteries that are able to be held by the station 30a and the station 30b is assumed to be 12, and the vehicle 20 is assumed to use two batteries.

As schematically indicated by a reference numeral 702, the amount of power resources is 12 from 0:00 to 6:00. That is, between a time of 0:00 and a time of 6:00, the control unit 240 causes all of the total 12 batteries held by the station 30a and the station 30b to belong to the group C, so as to provide the adjustment capacity to the power network 90.

Here, it is assumed that one vehicle 20 is predicted to use the station 30b at each of 10:00 and 11:00. Therefore, the control unit 240 causes two batteries to be charged from 6:00 to cause the two batteries to be transferred to a state (the group A) of being able to be used for the travel of the vehicle 20 by 10:00. In this manner, as schematically indicated by a reference numeral 704, the amount of power resources is 10 from 6:00 to 7:00. Further, the control unit 240 causes two batteries to be charged from 7:00 to cause the two batteries to be transferred to a state (the group A) of being able to be used for the travel of the vehicle 20 by 11:00. In this manner, as schematically indicated by a reference numeral 706, the amount of power resources is 8 from 7:00 to 10:00.

The station 30b is used by one vehicle 20 at 10:00, and the battery charged from 6:00 to 10:00 is replaced with the battery that has been mounted on the vehicle 20. The battery 12 returned from the vehicle 20 to the station 30b belongs to the group D having the lowest SOC, and thus is able to be used for the DR increase. In this manner, as schematically indicated by a reference numeral 708, the amount of power resources is 10. The control unit 240 may maintain, when the DR increase is predicted or scheduled in the future, a state in which the battery 12 returned to the station 30b belongs to the group D, within a range in which the request for using the battery 12 is satisfied.

Similarly, the station 30b is used by one vehicle 20 at 11:00, and the battery charged from 7:00 to 11:00 is replaced with the battery that has been mounted on the vehicle 20. The battery returned from the vehicle 20 to the station 30b belongs to the group D having the lowest SOC, and thus is able to be used for the DR increase. In this manner, the amount of power resources is 12. The control unit 240 may maintain, when the DR increase is predicted or scheduled in the future, a state in which the battery 12 returned to the station 30b belongs to the group D, within a range in which the request for using the battery 12 is satisfied.

Similarly, it is assumed that one vehicle 20 is predicted to use the station 30b at each of 16:00, 18:00, and 19:00 in the afternoon. In this case, charges of two batteries are started at 12:00, 14:00, and 15:00. In this manner, the amount of power resources from 12:00 to 14:00 is 10, the amount of power resources from 14:00 to 15:00 is 8, and the amount of power resources from 15:00 to 16:00 is 6.

The station 30b is used by one vehicle 20 at 16:00, and the battery charged from 12:00 to 16:00 is replaced with the battery that has been mounted on the vehicle 20. The battery returned from the vehicle 20 to the station 30b has the comparatively low SOC, and thus is able to be used for the DR increase. In this manner, the amount of power resources is 8 from 16:00 to 18:00.

The station 30b is used by one vehicle 20 at 18:00, and the battery charged from 14:00 to 18:00 is replaced with the battery that has been mounted on the vehicle 20. The battery returned from the vehicle 20 to the station 30b has the comparatively low SOC, and thus is able to be used for the DR increase. In this manner, the amount of power resources is 10 from 18:00 to 19:00.

The station 30b is used by one vehicle 20 at 19:00, and the battery charged from 15:00 to 19:00 is replaced with the battery that has been mounted on the vehicle 20. The battery returned from the vehicle 20 to the station 30b has the comparatively low SOC, and thus is able to be used for the DR increase. In this manner, the amount of power resources is 12 after 19:00.

The control unit 240 provides the power in accordance with the demand, by controlling, according to the demand from the server 180, the charges and the discharges of the batteries 12 that are able to provide the power resources which are held by the station 30a and the station 30b.

The control of the batteries 12 at the station 30a and the station 30b has been described above with reference to Fig. 7, and it is possible to treat entering (return) and leaving of the vehicles 10 at the station 30c and the station 30d, in a manner similar to the return and the provision of the batteries at the station 30a and the station 30b. Therefore, at the station 30c and the station 30d as well, it is possible to predict the amount of power resources in a method similar to the prediction of the amount of power resources at the station 30a and the station 30b. In addition, the control unit 240 can group, by the SOC, all of the batteries 12 connected to the station 30a, the station 30b, the station 30c, and the station 30d, to control the ratios of the batteries 12 respectively belonging to the groups.

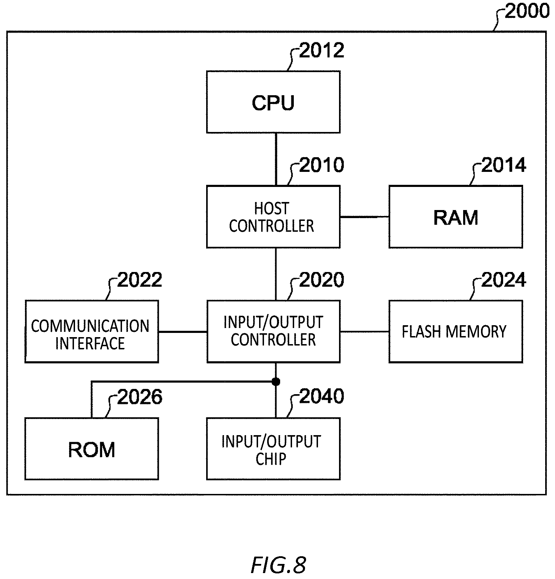

Fig. 8 shows an example of a computer 2000 in which a plurality of embodiments of the present invention may be entirely or partially embodied. A program installed on the computer 2000 can cause the computer 2000 to function as a system or each unit of the system according to the embodiment, or devices such as various types of control devices or each unit of the devices, or to execute an operation associated with the system or each unit of the system, or the devices or each unit of the devices, and/or to execute a process or steps of the process according to the embodiment. Such a program may be executed by a CPU 2012 to cause the computer 2000 to perform certain operations associated with the processing procedures described herein and some of or all of the blocks in the block diagrams.

The computer 2000 according to the present embodiment includes the CPU 2012 and a RAM 2014, which are mutually connected by a host controller 2010. The computer 2000 also includes a ROM 2026, a flash memory 2024, a communication interface 2022, and an input/output chip 2040. The ROM 2026, the flash memory 2024, the communication interface 2022, and the input/output chip 2040 are connected to the host controller 2010 via an input/output controller 2020.

The CPU 2012 operates according to programs stored in the ROM 2026 and the RAM 2014, thereby controlling each unit.

The communication interface 2022 communicates with other electronic devices via a network. The flash memory 2024 stores programs and data used by the CPU 2012 within the computer 2000. The ROM 2026 stores therein a boot program or the like executed by the computer 2000 at the time of activation, and/or a program depending on the hardware of the computer 2000. In addition, the input/output chip 2040 may connect various input/output units such as a keyboard, a mouse, and a monitor to the input/output controller 2020 via input/output ports such as a serial port, a parallel port, a keyboard port, a mouse port, a monitor port, a USB port, and an HDMI (registered trademark) port.

A program is provided via a network or a computer-readable storage medium such as a CD-ROM, a DVD-ROM, or a memory card. The RAM 2014, the ROM 2026, or the flash memory 2024 is an example of the computer-readable storage medium. Programs are installed in the flash memory 2024, the RAM 2014, or the ROM 2026 and executed by the CPU 2012. The information processing written in these programs is read by the computer 2000, and thereby cooperation between a program and the above described various types of hardware resources is achieved. A device or method may be constituted by carrying out the operation or processing of information by using the computer 2000.

For example, when a communication is carried out between the computer 2000 and an external device, the CPU 2012 may execute a communication program loaded onto the RAM 2014 to instruct the communication interface 2022 to process the communication, based on the processing written in the communication program. The communication interface 2022, under control of the CPU 2012, reads transmission data stored on transmission buffering regions provided in recording media such as the RAM 2014 and the flash memory 2024, and transmits the read transmission data to a network, and writes reception data received from a network to reception buffering regions or the like provided on the recording media.

In addition, the CPU 2012 may cause all or a necessary portion of a file or a database to be read into the RAM 2014, the file or the database having been stored in a recording medium such as the flash memory 2024, etc., and perform various types of processing on the data on the RAM 2014. The CPU 2012 then writes back the processed data to the recording medium.

Various types of information, such as various types of programs, data, tables, and databases, may be stored in the recording medium to undergo information processing. The CPU 2012 may perform various types of processing on the data read from the RAM 2014 to write the result back to the RAM 2014, the processing including various types of operations, information processing, conditional judging, conditional branch, unconditional branch, retrieval/replacement of information, etc., as described herein and designated by an instruction sequence of programs. In addition, the CPU 2012 may search for information in a file, a database, etc., in the recording medium. For example, when a plurality of entries, each having an attribute value of a first attribute associated with an attribute value of a second attribute, are stored in the recording medium, the CPU 2012 may search for an entry matching the condition whose attribute value of the first attribute is designated, from among the plurality of entries, and read the attribute value of the second attribute stored in the entry, thereby acquiring the attribute value of the second attribute associated with the first attribute satisfying the predetermined condition.

The programs or software modules described above may be stored in the computer-readable storage medium on the computer 2000 or in the vicinity of the computer 2000. A recording medium such as a hard disk or a RAM provided in a server system connected to a dedicated communication network or the Internet can be used as the computer-readable storage medium. A program stored in the computer-readable storage medium may be provided to the computer 2000 via a network.

A program that is installed in the computer 2000 and causes the computer 2000 to function as the system 100 may work on the CPU 2012 and the like to cause the computer 2000 to function as each unit of the system 100, respectively. Information processing written in these programs is read into the computer 2000 to cause the computer to function as each unit of the system 100, which is specific means realized by cooperation of software and the various types of hardware resources described above. Then, with the specific means, by realizing computing or processing of information according to an intended use of the computer 2000 in the present embodiment, the specific system 100 is constructed according to the intended use.

Various embodiments have been described by referring to the block diagrams and the like. In the block diagram, each block may represent (1) a step of a process in which an operation is executed, or (2) each unit of the device having a role of executing the operation. Certain steps and respective units may be implemented by dedicated circuitry, programmable circuitry supplied with computer-readable instructions stored on computer-readable storage media, and/or processors supplied with computer-readable instructions stored on computer-readable storage media. Dedicated circuitry may include digital and/or analog hardware circuits, and may include integrated circuits (IC) and/or discrete circuits. Programmable circuitry may include reconfigurable hardware circuits including logical AND, logical OR, logical XOR, logical NAND, logical NOR, and other logical operations, flip-flops, registers, memory elements, etc., such as field-programmable gate arrays (FPGA), programmable logic arrays (PLA), etc.

The computer-readable storage medium may include any tangible device that can store instructions for execution by a suitable device, and as a result, the computer-readable storage medium having instructions stored therein forms at least a portion of an article of manufacture including instructions which can be executed to create means for performing operations specified in processing procedures or the block diagrams. Examples of the computer-readable storage medium may include an electronic storage medium, a magnetic storage medium, an optical storage medium, an electromagnetic storage medium, a semiconductor storage medium, and the like. More specific examples of the computer-readable storage medium may include a floppy (registered trademark) disk, a diskette, a hard disk, a random access memory (RAM), a read only memory (ROM), an erasable programmable read only memory (EPROM or flash memory), an electrically erasable programmable read only memory (EEPROM), a static random access memory (SRAM), a compact disk read only memory (CD-ROM), a digital versatile disc (DVD), a Blu-ray (registered trademark) disc, a memory stick, an integrated circuit card, or the like.

The computer-readable instruction may include an assembler instruction, an instruction-set-architecture (ISA) instruction, a machine instruction, a machine dependent instruction, a microcode, a firmware instruction, state-setting data, or either of source code or object code written in any combination of one or more programming languages including an object-oriented programming language such as Smalltalk (registered trademark), JAVA (registered trademark), and C++, and a conventional procedural programming language such as a "C" programming language or a similar programming language.

Computer-readable instructions may be provided to a processor of a general purpose computer, special purpose computer, or other programmable data processing device, or to programmable circuitry, locally or via a local area network (LAN), wide area network (WAN) such as the Internet, etc., to execute the computer-readable instructions to provide means for performing described processing procedure or operations specified in the block diagrams. Examples of the processor include a computer processor, a processing unit, a microprocessor, a digital signal processor, a controller, a microcontroller, and the like.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention, as far as these alterations or improvements come within the scope of the appended claims.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, specification, or drawings, it does not necessarily mean that the process must be performed in this order.

### EXPLANATION OF REFERENCES

5 power system
10 vehicle
20 vehicle
12 battery
30 station
70 power consumer
80 power generation apparatus
90 power network
180 server
190 communication network
200 processing unit
210 classification unit
240 control unit
280 storage unit
290 communication apparatus
100 system
2000 computer
2010 host controller
2012 CPU
2014 RAM
2020 input/output controller
2022 communication interface
2024 flash memory
2026 ROM
2040 input/output chip.

## Claims

1. A system (100) configured to control a plurality of stations (30a-d) that are configured to charge and discharge a plurality of movable batteries (12a-d), the system comprising:
a classification unit (210) configured to divide the plurality of movable batteries (12 a-d) that are connected to the plurality of stations (30a-d), into a plurality of groups based on respective charging rates of the plurality of movable batteries; and
a control unit (240) configured to control ratios or a number of movable batteries belonging to each of the plurality of groups in each time window, based on a prediction of use in the plurality of stations (30a-d), **characterized in that**
the classification unit (210) is configured to divide the plurality of movable batteries (12 a-d) such that at least one of the plurality of groups includes at least one of the plurality of movable batteries (12 a-d) that are connected to a first station of the plurality of stations (30a-d) and at least one of the plurality of movable batteries (12a-d) that are connected to a second station of the plurality of station (30a-d), and the second station is different from the first station.

2. The system (100) according to claim 1, wherein
when some movable batteries among the plurality of movable batteries (12a-d) are predicted to be used, the control unit (240) is configured to cause a movable battery, among the plurality of movable batteries, belonging to a group that has a charging rate that can be charged to a predetermined value or higher by a predicted time of use to be charged, to be transferred to another group that has a higher charging rate.

3. The system (100) according to claim 1 or 2, wherein
the control unit (240) is configured to cause a movable battery, among the plurality of movable batteries (12a-d), belonging to a group whose charging rate is lower than a predetermined value, in response to a request to increase an amount of power consumption in the station to be charged, and to be transferred to another group that has a higher charging rate.

4. The system (100) according to any one of claims 1 to 3, wherein
the control unit (240) is configured to predict a request to increase or decrease an amount of power consumption in the plurality of stations (30a-d), and control, based on the prediction, ratios or a number of movable batteries belonging to each of the plurality of groups in each time window, within a range in which the prediction of use is satisfied.

5. The system (100) according to any one of claims 1 to 4, wherein
the control unit (240) is configured to maintain, when a request to decrease an amount of power consumption is predicted in the plurality of stations (30a-d), ratios or a number of movable batteries belonging to a group whose charging rate is higher than a predetermined value, at a predetermined value or higher.

6. The system (100) according to any one of claims 1 to 5, wherein
the control unit (240) is configured to maintain, when a request to increase an amount of power consumption is predicted in the plurality of stations (30a-d), ratios or a number of movable batteries belonging to a group whose charging rate is lower than a predetermined value, at a predetermined value or higher.

7. The system (100) according to any one of claims 1 to 6, further comprising:
the plurality of movable batteries (12a-d),wherein
the plurality of movable batteries (12a-d) include a battery that is to be mounted on a vehicle (10c, 10d, 20).

8. The system according to claim 7, wherein
the plurality of movable batteries (12a-d) include a battery (12a, 12b) that is to be mounted on a vehicle (20), which is replaceable at the plurality of stations.

9. A method for controlling a plurality of stations (30a-d) that are configured to charge and discharge a plurality of movable batteries (12a-d), the method comprising:
dividing the plurality of movable batteries that are connected to the plurality of stations (30a-d), into a plurality of groups based on respective charging rates of the plurality of movable batteries;
controlling ratios or a number of movable batteries belonging to each of the plurality of groups in each time window, based on a prediction of use in the plurality of stations (30a-d); and
**characterized in that** the dividing the plurality of movable batteries includes dividing the plurality of movable batteries such that at least one of the plurality of groups includes at least one of the plurality of movable batteries (12 a-d) that are connected to a first station of the plurality of stations (30a-d) and at least one of the plurality of movable batteries (12a-d) that are connected to a second station of the plurality of station (30a-d), and the second station is different from the first station.

10. A computer program comprising instructions which, when the program is executed by a computer, causes the computer to carry out the method of claim 9.

## Patentansprüche

1. System (100), das konfiguriert ist, um mehrere Stationen (30a-d) zu steuern, die konfiguriert sind, um mehrere bewegbare Batterien (12a-d) zu laden und zu entladen, wobei das System aufweist:
eine Klassifizierungseinheit (210), die konfiguriert ist, um die mehreren bewegbaren Batterien (12a-d), die mit den mehreren Stationen (30a-d) verbunden sind, basierend auf jeweiligen Laderaten der mehreren bewegbaren Batterien in mehrere Gruppen zu aufzuteilen, und
eine Steuereinheit (240), die konfiguriert ist, um Anteile oder eine Anzahl bewegbarer Batterien, die zu jeder der mehreren Gruppen in jedem Zeitfenster gehören, basierend auf einer Nutzungsvorhersage in den mehreren Stationen (30a-d) zu steuern, **dadurch gekennzeichnet, dass**
die Klassifizierungseinheit (210) konfiguriert ist, um die mehreren bewegbaren Batterien (12a-d) derart zu aufzuteilen, dass zumindest eine der mehreren Gruppen zumindest eine der mehreren bewegbare Batterien (12a-d), die mit einer ersten Station der mehreren Stationen (30a-d) verbunden sind, und zumindest eine der mehreren bewegbaren Batterien (12a-d), die mit einer zweiten Station der mehreren Stationen (30a-d) verbunden sind, enthält, und sich die zweite Station von der ersten Station unterscheidet.

2. Das System (100) nach Anspruch 1, wobei
wenn vorhergesagt wird, dass einige bewegbare Batterien unter den mehreren bewegbaren Batterien (12a-d) benutzt werden sollen, die Steuereinheit (240) konfiguriert ist, um zu veranlassen, dass, unter den mehreren Batterien (12a-d), eine bewegbare Batterie, die zu einer Gruppe gehört, die eine Laderate hat, die durch eine vorhergesagte Nutzungszeit zum Laden auf einen vorbestimmten Wert oder höher geladen werden kann, zu einer anderen Gruppe, die eine höheren Laderate hat, überführt wird.

3. Das System (100) nach Anspruch 1 oder 2, wobei
die Steuereinheit (240) konfiguriert ist, um zu veranlassen, dass, unter den mehreren bewegbaren Batterien (12a-d), eine bewegbare Batterie, die zu einer Gruppe gehört, deren Laderate niedriger als ein vorbestimmter Wert ist, in Antwort auf eine Anfrage zum Erhöhen einer Stromverbrauchsmenge in der Station geladen werden soll, und zu einer anderen Gruppe überführt werden soll, die einer höhere Laderate hat.

4. Das System (100) nach einem der Ansprüche 1 bis 3, wobei
die Steuereinheit (240) konfiguriert ist, um eine Anfrage zum Erhöhen oder Verringern einer Stromverbrauchsmenge in den mehreren Stationen (30a-d) vorherzusagen, und basierend auf der Vorhersage, Anteile oder eine Anzahl bewegbarer Batterien, die zu jeder der mehreren Gruppen in jedem Zeitfenster gehören, innerhalb eines Bereichs zu steuern, in dem die Nutzungsvorhersage erfüllt ist.

5. Das System (100) nach einem der Ansprüche 1 bis 4, wobei
die Steuereinheit (240) konfiguriert ist, um, wenn eine Anfrage zum Verringern einer Stromverbrauchsmenge in den mehreren Stationen (30a-d) vorhergesagt wird, Anteile oder eine Anzahl bewegbarer Batterien, die zu einer Gruppe gehören, deren Laderate höher als ein vorbestimmter Wert ist, auf einem vorbestimmten Wert oder höher zu halten.

6. Das System (100) nach einem der Ansprüche 1 bis 5, wobei
die Steuereinheit (240) konfiguriert ist, um, wenn eine Anfrage zum Erhöhen einer Stromverbrauchsmenge in den mehreren Stationen (30a-d) vorhergesagt wird, Anteile oder eine Anzahl bewegbarer Batterien, die zu einer Gruppe gehören, deren Laderate niedriger als ein vorbestimmter Wert ist, auf einem vorbestimmten Wert oder höher zu halten.

7. Das System (100) nach einem der Ansprüche 1 bis 6, das ferner
die mehreren bewegbaren Batterien (12a-d) aufweist, wobei
die mehreren bewegbaren Batterien (12a-d) eine Batterie enthalten, die an einem Fahrzeug (10c, 10d, 20) anzubringen ist.

8. Das System nach Anspruch 7, wobei
die mehrere bewegbaren Batterien (12a-d) eine an einem Fahrzeug (20) anzubringende Batterie (12a, 12b) enthalten, die an den mehreren Stationen austauschbar ist.

9. Verfahren zum Steuern mehrerer Stationen (30a-d), die konfiguriert sind, um mehrere bewegbare Batterien (12a-d) zu laden und zu entladen, wobei das Verfahren aufweist:
Aufteilen der mehreren bewegbaren Batterien, die mit den mehreren Stationen (30a-d) verbunden sind, in mehrere Gruppen basierend auf jeweiligen Laderaten der mehreren bewegbaren Batterien;
Steuern von Anteilen oder einer Anzahl bewegbarer Batterien, die zu jeder der mehreren Gruppen in jedem Zeitfenster gehören, basierend auf einer Nutzungsvorhersage der mehreren Stationen (30a-d); und
**dadurch gekennzeichnet, dass** das Aufteilen der mehreren bewegbare Batterien enthält, die mehreren bewegbaren Batterien derart aufzuteilen, dass zumindest eine der mehreren Gruppen zumindest eine der mehreren bewegbaren Batterien (12a-d), die mit einer ersten Station der mehreren Stationen (30a-d) verbunden sind, und zumindest eine der mehreren bewegbaren Batterien (12a-d), die mit einer zweiten Station der mehreren Stationen (30a-d) verbunden sind, enthält, und sich die zweite Station von der ersten Station unterscheidet.

10. Computerprogramm, das Anweisungen aufweist, die, wenn das Programm von einem Computer ausgeführt wird, veranlassen, dass der Computer das Verfahren nach Anspruch 9 ausführt.

## Revendications

1. Système (100) configuré pour commander une pluralité de stations (30ad) qui sont configurées pour charger et décharger une pluralité de batteries mobiles (12a-d), le système comportant :
une unité de classification (210) configurée pour diviser la pluralité de batteries mobiles (12 a-d) qui sont connectées à la pluralité de stations (30a-d), en une pluralité de groupes sur la base de taux de charge respectifs de la pluralité de batteries mobiles ; et
une unité de commande (240) configurée pour commander des rapports ou un nombre de batteries mobiles appartenant à chacun de la pluralité de groupes dans chaque fenêtre de temps, sur la base d'une prédiction d'utilisation dans la pluralité de stations (30a-d), **caractérisé en ce que**
l'unité de classification (210) est configurée pour diviser la pluralité de batteries mobiles (12 a-d) de sorte qu'au moins l'un de la pluralité de groupes inclut au moins l'une de la pluralité de batteries mobiles (12 a-d) qui sont connectées à une première station de la pluralité de stations (30a-d) et au moins l'une de la pluralité de batteries mobiles (12a-d) qui sont connectées à une seconde station de la pluralité de stations (30a-d), et la seconde station est différente de la première station.

2. Système (100) selon la revendication 1, dans lequel
lorsqu'il est prédit que certaines batteries mobiles parmi la pluralité de batteries mobiles (12a-d) doivent être utilisées, l'unité de commande (240) est configurée pour amener une batterie mobile, parmi la pluralité de batteries mobiles, appartenant à un groupe qui présente un taux de charge qui peut être chargé à une valeur prédéterminée ou supérieure d'ici un temps d'utilisation prédit, à être chargée et à être transférée vers un autre groupe qui présente un taux de charge plus élevé.

3. Système (100) selon la revendication 1 ou 2, dans lequel
l'unité de commande (240) est configurée pour amener une batterie mobile, parmi la pluralité de batteries mobiles (12a-d), appartenant à un groupe dont le taux de charge est inférieur à une valeur prédéterminée, en réponse à une demande d'augmentation d'une quantité de consommation d'énergie dans la station, à être chargée et à être transférée vers un autre groupe qui présente un taux de charge plus élevé.

4. Système (100) selon l'une quelconque des revendications 1 à 3, dans lequel
l'unité de commande (240) est configurée pour prédire une demande d'augmentation ou de diminution d'une quantité de consommation d'énergie dans la pluralité de stations (30a-d), et commander, sur la base de la prédiction, des rapports ou un nombre de batteries mobiles appartenant à chacun de la pluralité de groupes dans chaque fenêtre de temps, dans une plage dans laquelle la prédiction d'utilisation est satisfaite.

5. Système (100) selon l'une quelconque des revendications 1 à 4, dans lequel
l'unité de commande (240) est configurée pour maintenir, lorsqu'une demande de diminution d'une quantité de consommation d'énergie est prédite dans la pluralité de stations (30a-d), des rapports ou un nombre de batteries mobiles appartenant à un groupe dont le taux de charge est supérieur à une valeur prédéterminée, à une valeur prédéterminée ou supérieure.

6. Système (100) selon l'une quelconque des revendications 1 à 5, dans lequel
l'unité de commande (240) est configurée pour maintenir, lorsqu'une demande d'augmentation d'une quantité de consommation d'énergie est prédite dans la pluralité de stations (30a-d), des rapports ou un nombre de batteries mobiles appartenant à un groupe dont le taux de charge est inférieur à une valeur prédéterminée, à une valeur prédéterminée ou supérieure.

7. Système (100) selon l'une quelconque des revendications 1 à 6, comportant en outre :
la pluralité de batteries mobiles (12a-d), dans lequel
la pluralité de batteries mobiles (12a-d) inclut une batterie qui doit être montée sur un véhicule (10c, 10d, 20).

8. Système selon la revendication 7, dans lequel
la pluralité de batteries mobiles (12a-d) inclut une batterie (12a, 12b) qui doit être montée sur un véhicule (20), qui est remplaçable au niveau de la pluralité de stations.

9. Procédé de commande d'une pluralité de stations (30a-d) qui sont configurées pour charger et décharger une pluralité de batteries mobiles (12a-d), le procédé comportant :
la division de la pluralité de batteries mobiles qui sont connectées à la pluralité de stations (30a-d), en une pluralité de groupes sur la base de taux de charge respectifs de la pluralité de batteries mobiles ;
la commande de rapports ou d'un nombre de batteries mobiles appartenant à chacun de la pluralité de groupes dans chaque fenêtre de temps, sur la base d'une prédiction d'utilisation dans la pluralité de stations (30a-d) ; et
**caractérisé en ce que** la division de la pluralité de batteries mobiles inclut la division de la pluralité de batteries mobiles de sorte qu'au moins l'un de la pluralité de groupes inclut au moins l'une de la pluralité de batteries mobiles (12 a-d) qui sont connectées à une première station de la pluralité de stations (30a-d) et au moins l'une de la pluralité de batteries mobiles (12a-d) qui sont connectées à une seconde station de la pluralité de stations (30a-d), et la seconde station est différente de la première station.

10. Programme informatique comportant des instructions qui, lorsque le programme est exécuté par un ordinateur, amènent l'ordinateur à réaliser le procédé selon la revendication 9.
